# EUROPÄISCHE PATENTSCHRIFT

(11) **EP 3 255 923 B1**
(45) Veröffentlichungstag und Bekanntmachung des Hinweises auf die Patenterteilung: **18.04.2018**
(21) Anmeldenummer: 16173138.5
(22) Anmeldetag: 06.06.2016
(51) Int. Cl.: H04W 28/16, G06F 9/50, H04W 16/00, H04W 16/18, H04W 72/08, H04W 72/04

(54) **KOMMUNIKATIONSNETZWERK UND VERFAHREN MIT SUBNETZWERK UND GEKAPSELTEM UNTERSUBNETZWERK**
COMMUNICATION NETWORK AND METHOD WITH SUB-NETWORK AND CAPSULATED SUB-SUB-NETWORK
RESEAU DE COMMUNICATION ET PROCEDE AVEC UN SOUS-RESEAU ET SOUS-RESEAU ENCAPSULE

(43) Veröffentlichungstag der Anmeldung: 13.12.2017
(73) Patentinhaber: Deutsche Telekom AG, 53113 Bonn (DE)
(72) Erfinder: Paul, Manuel, 12683 Berlin (DE)
(74) Vertreter: Patentship Patentanwaltsgesellschaft mbH

(56) Entgegenhaltungen:
- Näslund M et al.: "Deliverable D2.1 - Use Cases", 5G Ensure; 5G ENABLERS FOR NETWORK AND SYSTEM SECURITY AND RESILIENCE , 1. Februar 2016 (2016-02-01), Seiten 1-79, XP002763701, Gefunden im Internet: URL:http://www.5gensure.eu/sites/default/f iles/Deliverables/5G-ENSURE_D2.1-UseCases. pdf [gefunden am 2016-11-01]

## Beschreibung

Die vorliegende Erfindung betrifft ein Kommunikationsnetzwerk mit einer Mehrzahl von Subnetzwerken, insbesondere ein 5G-Kommunikationsnetzwerk mit mehreren Slices, wobei zumindest ein Subnetzwerk ein Untersubnetzwerk umfasst, das kommunikationstechnisch gekapselt in dem Subnetzwerk angeordnet ist, und eine erste Netzwerkentität in dem gekapselten Untersubnetzwerk, die ausgebildet ist, eine erste Netzwerkfunktion auszuführen. Ferner betrifft die Erfindung ein Verfahren zum Ausführen der ersten Netzwerkfunktion in dem gekapselten Untersubnetzwerk.

Die fünfte Generation der mobilen Technologie (5G) betrifft die Anforderungen und technischen Herausforderungen der künftigen Kommunikationsnetze ab etwa dem Jahr 2020 und darüber hinaus. Damit wird eine vollständig mobile und vernetzte Gesellschaft angesprochen, die durch ein enormes Wachstum an Datenverkehr sowie gegenseitiger Vernetzung auf mehreren Ebenen charakterisiert ist.

In 5G werden neue Funkschnittstellen benötigt, um den Anforderungen an die Nutzung höherer Frequenzen gerecht zu werden, beispielsweise für neue Anwendungen wie Internet der Dinge (IoT), spezielle Fähigkeiten wie z.B. geringerer Laufzeit, welche über das hinausgehen was 4G Kommunikationsnetze fähig sind zu leisten. Dabei wird 5G als ein Ende-zu-Ende System betrachtet, das sämtliche Netzwerkaspekte beinhaltet mit einem Design, das einen hohen Grad an Konvergenz ermöglicht. 5G wird die heutigen Zugangsmechanismen und deren mögliche Weiterentwicklungen vollständig nutzten, einschließlich der heutigen Festnetzzugangstechnologien vieler anderer noch zu entwickelnder Zugangstechnologien.

5G wird in einem stark heterogenen Umgebung operieren, d.h. mit mehreren Typen von Zugangstechnologien, mehrschichtigen Netzwerken, vielfältigen Typen von Kommunikationsgeräten und Nutzerinteraktionen etc. Verschiedenste Anwendungen mit diametralen Anforderungen sollen optimal unterstützt werden, z.B. ausfallsichere, robuste Kommunikation, Kommunikation mit geringen Datenraten oder breitbandige Kommunikation in dicht besiedelten Raumen. In solch einer Umgebung gibt es ein fundamentales Verlangen nach 5G, um ein nahtloses und konsistentes Nutzererlebnis über Zeit und Raum zu erfüllen. Für den Betreiber eines 5G Kommunikationsnetzes besteht die Notwendigkeit die eingesetzten Ressourcen optimal und dynamisch an die jeweiligen Anforderungen anzupassen, um die Vielzahl an Anwendungen gleichzeitig unterstützen zu können.

Deshalb besteht in 5G zum einen ein Bedürfnis daran, die Leistungsfähigkeit der Kommunikation zu steigern, insbesondere einen höheren Datendurchsatz, eine geringere Verzögerung, eine besonders hohe Zuverlässigkeit, eine weitaus höhere Verbindungsdichte und einen größeren Mobilitätsbereich bereitzustellen, zum anderen aber auch die Flexibilität im Betrieb zu erhöhen und maßgeschneiderte Funktionen mit dem geringstmöglichen Einsatz von Mitteln bereitzustellen. Diese erhöhte Leistungsfähigkeit wird zusammen mit der Fähigkeit zur Steuerung stark heterogener Umgebungen und der Fähigkeit zur Sicherung von Vertrauen, Identität und Privatsphäre der Nutzer erwartet.

Es ist die Aufgabe der vorliegenden Erfindung, ein Konzept zu schaffen, um die Flexibilität und Zuverlässigkeit der Kommunikation zu steigern, insbesondere in 5G bezüglich der oben genannten Anforderungen.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

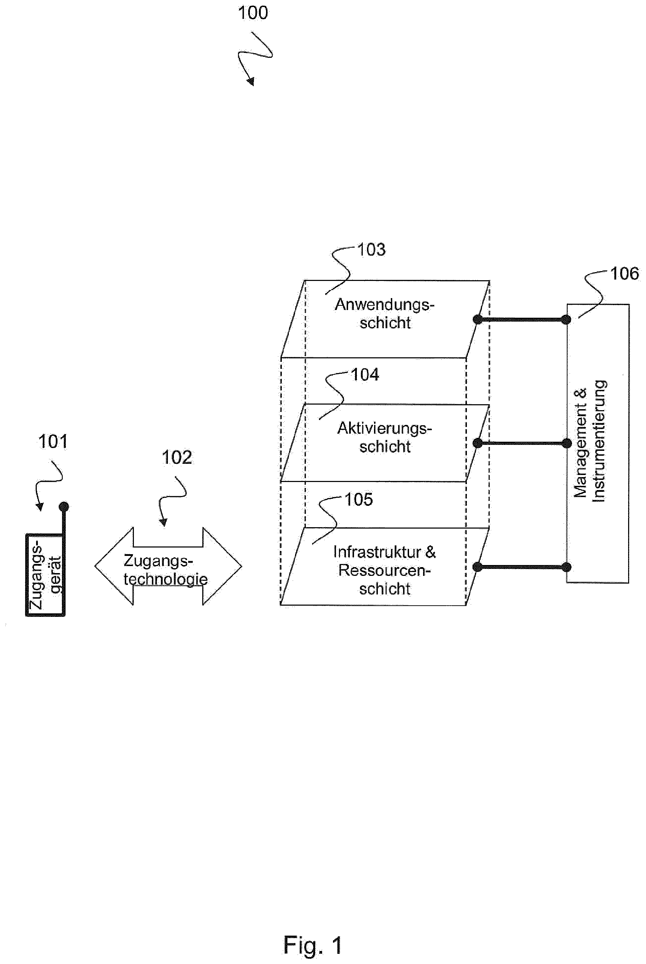

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G Systemarchitektur. Fig. 1 zeigt eine schematische Darstellung einer solchen 5G Systemarchitektur 100. Die 5G Systemarchitektur 100 umfasst einen Bereich mit 5G Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs-und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 104, 103 und der Management- & Instrumentierungsebene 106 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametem für bestimmte Teile des Netzwerks, z.B. den Funkzugang. Diese Funktionen und Fähigkeiten können auf Anforderung durch die Management- & Instrumentierungsebene 106 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 106 erlaubt zum Beispiel, bestimmte, d.h. dedizierte Netzwerk Slices (Netzwerkscheiben) für eine Anwendung aufzubauen, oder eine Anwendung einem existierenden Netzwerk Slice zuzuweisen.

Die Management- & Instrumentierungsebene 106 ist der Kontaktpunkt, um die geforderten Anwendungsfälle (Use Cases, auch Geschäftsmodelle) in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 106 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und - bereitstellung zu optimieren.

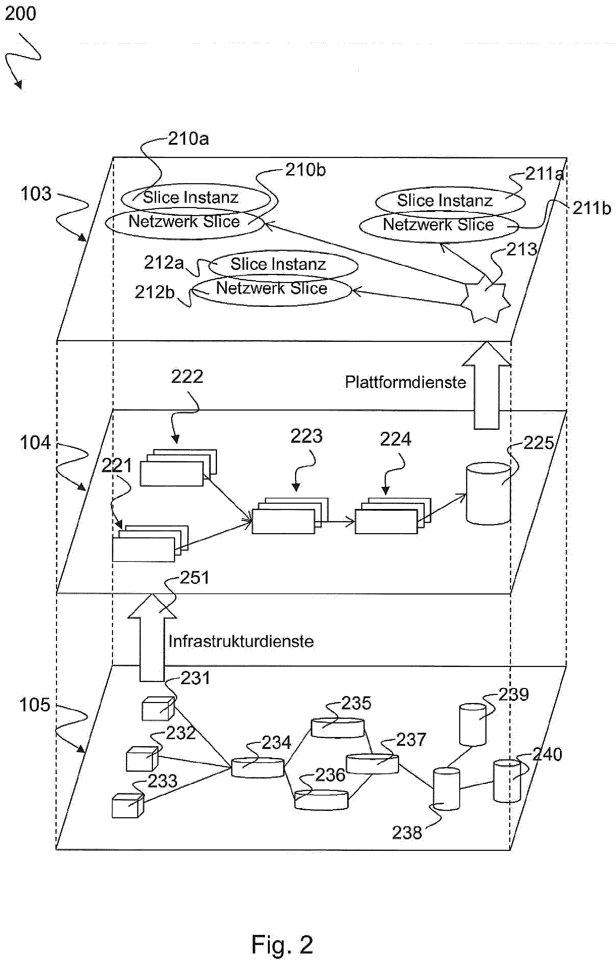

Die hier vorgestellten Geräte, Systeme und Verfahren sind dazu vorgesehen, die Kommunikation in Kommunikationsnetzen zu verbessern, insbesondere in 5G Kommunikationsnetzen mit mehreren Netzwerk Slices (Netzwerkscheiben), wie im Folgenden beschrieben. Fig. 2 zeigt eine schematische Darstellung eines 5G-Kommunikationsnetzwerks 200 mit mehreren Netzwerk Slices (Netzwerkscheiben). Das 5G-Kommunikationsnetzwerks 200 umfasst eine Infrastruktur- & Ressourcenschicht 105, eine Aktivierungsschicht 104 und eine Anwendungsschicht 103.

Die Infrastruktur- & Ressourcenschicht 105 umfasst alle physikalischen Aktiva, die einem Netzwerkbetreiber zugeordnet sind, d.h. Standorte, Kabel, Netzwerkknoten etc. Diese Schicht 105 bildet die Grundlage für alle Netzwerk Slices. Sie ist so generisch wie möglich aufgebaut ohne zu viele spezialisierte physikalische Einheiten. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von (z.B. nicht-physikalischen) Software Objekten /VNFs hinzu um das Erzeugen von jeder Art von Netzwerk Slices zu ermöglichen und so eine Plattform als Dienst der nächsthöheren Schicht 103 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekten 224 überführt werden können und in einer Objektbibliothek 225 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 104 spielt für den Erfolg dieses Konzepts eine Schlüsselrolle da sie alle Softwareobjekte umfasst kann, die notwendig sind, um die Netzwerk Slices und die entsprechenden Fertigkeiten zum Handhaben der Objekte bereitzustellen. Die Aktivierungsschicht 104 kann als eine Art von Netzwerk-Betriebssystem betrachtet werden komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instand halten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 103 umfasst alle erzeugten Netzwerk Slices 210b, 211 b, 212b und bietet diese als "Netzwerk als Service" verschiedenen Netzwerknutzern, z.B. verschiedenen Kunden an. Das Konzept erlaubt die Wiederbenutzung von definierten Netzwerk Slices 210b, 211 b, 212b für verschiedene Anwender, z.B. Kunden, beispielsweise als eine neue Netzwerk Slice Instanz 210a, 211a, 212a. D.h. ein Netzwerk Slice 210b, 211 b, 212b, welcher beispielsweise einer Automotive Anwendung zugeordnet ist, kann auch für Anwendungen verschiedener anderer industrieller Anwendungen genutzt werden. Die Slices Instanzen 210a, 211a, 212a, die von einem ersten Anwender erzeugt wurden, können beispielsweise unabhängig von den Slice Instanzen sein, die von einem zweiten Anwender erzeugt wurden, und das obwohl die gesamte Netzwerk
Slice Funktionalität dieselbe sein kann.

Das Dokument "Näslund M et al.: 'Deliverable D2.1 - Use Cases', 5G Ensure; 5G ENABLERS FOR NETWORK AND SYSTEM SECURITY AND RESILIENCE, 1. Februar 2016 (2016-02-01), Seiten 1-79, XP002763701, (URL:
http://www.5gensure.eu/sites/default/files/Deliverables/5G-ENSURE_D2.1-UseCases.pdf
   [gefunden am 2016-11-01])" beschreibt ein Kommunikationsnetzwerk mit einer Mehrzahl von Subnetzwerken ("slices"), wobei zumindest ein Subnetzwerk ein gekapseltes Untersubnetzwerk ("sub-slice") umfasst, das in dem Subnetzwerk kommunikationstechnisch gekapselt angeordnet ist, und wobei eine erste innerhalb des Untersubnetzwerks angeordnete Netzwerkentität ("API") ausgebildet ist, um eine erste Netzwerkfunktion des Subnetzwerks auszuführen.

Gemäß einem ersten Aspekt betrifft die Erfindung ein Kommunikationsnetzwerk mit einer Mehrzahl von Subnetzwerken, wobei zumindest ein Subnetzwerk folgendes umfasst: ein gekapseltes Untersubnetzwerk, das in dem Subnetzwerk kommunikationstechnisch gekapselt angeordnet ist; eine erste Netzwerkentität, welche ausgebildet ist, eine erste Netzwerkfunktion des Subnetzwerks auszuführen, wobei die erste Netzwerkentität innerhalb des Untersubnetzwerks angeordnet ist; und einen Funktionsmanager, welcher ausgebildet ist, die Ausführung der ersten Netzwerkfunktion durch die erste Netzwerkentität in dem gekapselten Untersubnetzwerk zu verwalten, d.h. zu steuern und zu überwachen. Das gekapselte Untersubnetzwerk umfasst zumindest eine Schnittstelle, die ausgebildet ist, das gekapselte Untersubnetzwerk mit dem Subnetzwerk zu koppeln, wobei die kommunikationstechnische Kapselung eine Kommunikation von dem Untersubnetzwerk über die zumindest eine Schnittstelle des Untersubnetzwerks zu dem Subnetzwerk vorsieht, jedoch keine Kommunikation unter Umgehung der zumindest einen Schnittstelle des Untersubnetzwerks von dem Untersubnetzwerk zu dem Subnetzwerk.

Dies bietet den Vorteil, dass das Untersubnetzwerk über die Schnittstelle in definierter Weise an die Umgebung angepasst werden kann. Beispielsweise können die Schnittstellen bestimmte Eingangsparameter aus dem Subnetzwerk dem Untersubnetzwerk zur Verfügung stellen oder die Ausgänge des Untersubnetzwerks können in definierter Weise über den Ausgang des Subnetzwerks weiteren Subnetzwerken zur Verfügung gestellt werden. Damit geht eine erhöhte Flexibilität des Kommunikationsnetzwerks einher.

Die Aufgabe des Funktionsmanagers ist eine vollständige Verwaltung der Ressourcen innerhalb des Untersubnetzwerks bzw. Containers und geht daher deutlich über ein bloßes Monitoring hinaus. Damit wird eine "Innensicht" in das Untersubnetzwerk bzw. den Container ermöglicht. Bei bestimmten Anwendungsfällen kann diese Verwaltung auch in die Hand des Dienstbenutzers (Slice-User) gegeben werden.
Aufgrund des Subnetzwerk-Aufbaus des Kommunikationsnetzwerks kann die Leistungsfähigkeit der Kommunikation gesteigert werden. Insbesondere kann damit ein höherer Datendurchsatz, eine geringere Verzögerung, eine besonders hohe Zuverlässigkeit, eine weitaus höhere Verbindungsdichte und ein größerer Mobilitätsbereich erlangt werden.

Die Realisierung des gekapselten Untersubnetzwerks innerhalb des Subnetzwerks ermöglicht es, Funktionscode auf den Komponenten des Untersubnetzwerks laufen zu lassen ohne die restlichen Komponenten des Subnetzwerks außerhalb des gekapselten Untersubnetzwerks zu beeinflussen. Diese erhöht die Stabilität des gesamten Netzwerks, beispielsweise für den Fall, dass in dem gekapselten Untersubnetzwerk Testcode geladen wird, dessen Verhalten im Feldtest überprüft werden soll oder für den Fall, dass Fremdcode eines anderen Netzwerkbetreibers auf dem Untersubnetzwerk geladen wird, dessen Verhalten im Verhältnis zum eigenen Code des Heimatnetzbetreibers nicht vorhersagbar ist. Der Aufbau des Subnetzwerks mit gekapseltem Untersubnetzwerk steigert die Flexibilität des gesamten Kommunikationsnetzwerks und zugleich ihre Zuverlässigkeit, da mögliche Instabilitäten sich nur lokal begrenzt (d.h. innerhalb des gekapselten Untersubnetzwerks) auswirken.

Zugleich gewährleistet der Funktionsmanager eine schnelle Erkennung von Fehlerzuständen oder Unregelmäßigkeiten in den Komponenten des Untersubnetzwerks, so dass schnell auf das Vorhandensein solcher Zustände reagiert werden kann.

Gemäß einer Ausführungsform des Kommunikationsnetzwerks ist das Kommunikationsnetzwerk ein Netzwerk einer fünften Generation (5G) oder einer weiteren Generation, und das Subnetzwerk ist ein Slice des Kommunikationsnetzwerkes.

Damit können alle Vorteile der 5G Netzstruktur realisiert werden, wie beispielsweise höhere Funkfrequenzen mit höherem Datendurchsatz, neue Anwendungen, wie beispielsweise Internet der Dinge, spezielle Fähigkeiten wie z.B. geringere Laufzeit, welche über das hinausgehen was 4G Kommunikationsnetze fähig sind zu leisten. Das Kommunikationsnetz kann ein Ende-zu-Ende System bieten, das sämtliche Netzwerkaspekte beinhaltet mit einem hohen Grad an Konvergenz. Ferner können die existierenden Zugangsmechanismen und deren mögliche Weiterentwicklungen vollständig genutzt werden.

Gemäß einer Ausführungsform des Kommunikationsnetzwerks umfasst die erste Netzwerkfunktion einen ersten Softwarecode oder ein erstes Softwaremodul zum Betreiben der ersten Netzwerkentität.

Mit diesen Softwarecodes können die Netzwerkfunktionen die verschiedensten Netzwerkentitäten, wie z.B. Festnetz- und Mobilfunknetzkomponenten mit Zugangsknoten, Cloud-Knoten, Verarbeitungsknoten, Speicherknoten, 5G Geräten wie z.B. Mobiltelefone, tragbare Geräte, CPEs, Niaschinenkommunikationsmodule und andere Netzwerkknoten und zugehörige Links ansteuern bzw. betreiben. Die Softwarecodes der Netzfunktionen können 5G Geräten vielfältige und konfigurierbare Fähigkeiten verleihen und sie beispielsweise abhängig von dem jeweiligen Kontext als Computer/Speicher Ressource arbeiten lassen. Die Softwarecodes können entsprechende API (Applikationsprogramm-Interface) bereitstellen, um diese Ressourcen zur Verfügung zu stellen. Damit lässt sich ein sehr flexibles Netzwerkdesign realisieren.

Gemäß einer Ausführungsform des Kommunikationsnetzwerks ist der Funktionsmanager ausgebildet, den ersten Softwarecode der ersten Netzwerkfunktion auf die erste Netzwerkentität zu laden und eine Ausführung des ersten Softwarecodes auf der ersten Netzwerkentität zu steuern und zu überwachen.

Damit lässt sich der Funktionsmanager zur effizienten Steuerung und Überwachung der einzelnen Netzwerkfunktionen einsetzen und insbesondere zur Steuerung und Überwachung der im gekapselten Untersubnetzwerk genutzten Netzwerkfunktionen.
Die Netzwerkfunktionen können beispielsweise als eine Bibliothek von Funktionen realisiert sein, die innerhalb des konvergierten Kommunikationsnetzwerks in Form von Bausteinen einer modularen Architektur zur Verfügung stehen. Die Softwaremodule können beispielsweise einen Satz von Konfigurationsparametern für bestimmte Teile des Netzwerks, z.B. den Funkzugang, bereitstellen. Diese Funktionen und Fähigkeiten können auf Anforderung durch den Funktionsmanager aufgerufen werden, beispielsweise durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Der Funktionsmanager hat damit vielfältige Möglichkeiten der Steuerung der einzelnen Netzwerkfunktionen.

Gemäß einer Ausführungsform des Kommunikationsnetzwerks umfasst das Subnetzwerk eine zweite Netzwerkentität, welche ausgebildet ist, eine zweite Netzwerkfunktion des Subnetzwerks auszuführen, wobei die zweite Netzwerkentität innerhalb des Untersubnetzwerks angeordnet ist.

Dies bietet den Vorteil, dass in dem gekapselten Untersubnetzwerk die verschiedensten Netzwerkfunktionen zusammengestellt werden können und auf Netzwerkentitäten des Untersubnetzwerks unabhängig von den Netzwerkentitäten außerhalb des Untersubnetzwerks ausgeführt und getestet werden können. Damit bietet das Untersubnetzwerk die gleiche Flexibilität wie das Subnetzwerk. Ein auf dem Untersubnetzwerk erfolgreich getesteter Code kann somit 1:1 auf dem Subnetzwerk implementiert werden ohne größere Anpassungen vornehmen zu müssen.

Gemäß einer Ausführungsform des Kommunikationsnetzwerks ist der Funktionsmanager ausgebildet, einen zweiten Softwarecode zum Betreiben der zweiten Netzwerkentität entsprechend der zweiten Netzwerkfunktion auf die zweite Netzwerkentität zu laden und eine Ausführung des zweiten Softwarecodes auf der zweiten Netzwerkentität zu steuern und zu überwachen.

Damit lässt sich der Funktionsmanager zur effizienten Steuerung und Überwachung des gekapselten Untersubnetzwerks sowie der einzelnen Netzwerkfunktionen innerhalb des gekapselten Untersubnetzwerk einsetzen. Er bietet die gleichen Vorteile wie bereits oben in Bezug auf den ersten Softwarecode der ersten Netzwerkentität beschrieben.

Gemäß einer Ausführungsform des Kommunikationsnetzwerks ist der Funktionsmanager ausgebildet, die zweite Netzwerkfunktion mit der ersten Netzwerkfunktion zu vernetzen.

Durch die Vernetzung der einzelnen Netzwerkfunktionen untereinander kann der Funktionsmanager die Komplexität und Leistungsfähigkeit des gesamten Kommunikationsnetzwerks erhöhen, die Komplexität aber zugleich hinter den Netzwerk Slices verborgen halten. Beispielsweise kann ein Nutzer lediglich über einen KPI (Key Performance Indikator) eine mobile Breitband-Slice erzeugen ohne dabei spezifische Features wie individuelle lokale Antennenbedeckung, Backhaul-Verbindungen und spezifische Parametrisierungsgrade spezifizieren zu müssen. Über die Vernetzung kann der Funktionsmanager eine offene Umgebung unterstützen und es ermöglichen, Netzwerkfunktionen auf Anforderung hinzuzufügen oder zu löschen, je nach Wunsch des Anwenders. Dies steigert den Funktionsumfang des gesamten Kommunikationsnetzwerks. Gemäß einer Ausführungsform des Kommunikationsnetzwerks umfasst das zumindest eine Subnetzwerk eine dritte Netzwerkentität, welche ausgebildet ist, eine dritte Netzwerkfunktion des Subnetzwerks auszuführen, wobei die dritte Netzwerkentität außerhalb des Untersubnetzwerks angeordnet ist.

Damit lässt sich das Subnetzwerk mit eigenen Netzwerkentitäten mit eigenen Netzwerkfunktionen unabhängig von dem gekapselten Untersubnetzwerk betreiben, was eine erhöhte Flexibilität im Netzwerk-Rollout bedeutet.
Gemäß einer Ausführungsform des Kommunikationsnetzwerks ist der Funktionsmanager ausgebildet, den ersten Softwarecode der ersten Netzwerkfunktion und/oder den zweiten Softwarecode der zweiten Netzwerkfunktion ohne Beeinflussung der dritten Netzwerkfunktion auszuführen.
Dies führt zu einer erhöhten Stabilität des gesamten Kommunikationsnetzwerks. Der Netzwerkbetreiber kann sein Netz stabil halten auch wenn es in anderen Teilen des Netzes, d.h. hier dem Untersubnetzwerk, aufgrund eines Fremdcodes zu Instabilitäten oder Funktionsstörungen kommen kann.

Gemäß einer Ausführungsform umfasst das Kommunikationsnetzwerk ferner einen Subnetzwerkmanager, der dem Subnetzwerk zugeordnet ist, und der ausgebildet ist, das gekapselte Untersubnetzwerk über die zumindest eine Schnittstelle mit der dritten Netzwerkfunktion der dritten Netzwerkentität zu vernetzen, und der ferner ausgebildet ist, die dritte Netzwerkfunktion der dritten Netzwerkentität zu steuern und zu überwachen.

Dies bietet den Vorteil, dass der Subnetzwerkmanager in definierter Weise das gekapselte Untersubnetzwerk an das Subnetzwerk anbinden kann. Damit kann vermieden werden, dass sich Instabilitäten oder Fehlerzustände im Untersubnetzwerk auf das Subnetzwerk auswirken. Insgesamt wird damit die Stabilität des Kommunikationsnetzes als solchem erhöht.

Gemäß einer Ausführungsform umfasst das Kommunikationsnetzwerk ferner einen Schalter, der ausgebildet ist, in einer ersten Schalterstellung das gekapselte Untersubnetzwerk in das Subnetzwerk zu schalten und in einer zweiten Schalterstellung das gekapselte Untersubnetzwerk in dem Subnetzwerk zu überbrücken.

Dies bietet den Vorteil, dass durch den Schalter eine flexible Konfiguration des Subnetzes möglich wird. So kann beispielsweise ein erfolgreich getestetes Untersubnetzwerk durch einfaches Schalterumlegen in das Subnetzwerk eingebunden werden oder, für weitere Tests wieder aus dem Subnetz herausgenommen werden. Damit vereinfacht sich der Testaufwand zum Testen neuer Netzwerkfunktionen.

Gemäß einer Ausführungsform des Kommunikationsnetzwerks ist der Schalter ferner ausgebildet, die erste Netzwerkentität und die zweite Netzwerkentität des gekapselten Untersubnetzwerks selektiv in das Subnetzwerk zu schalten oder zu überbrücken.

Dies bietet den Vorteil, dass eine weitere Differenzierung der einzelnen Netzwerkentitäten möglich ist. Beispielsweise kann eine bereits erfolgreich getestete Netzwerkfunktion für die Ausführung in das Subnetzwerk aufgenommen werden, während eine andere, noch nicht erfolgreich getestete Netzwerkfunktion noch im Untersubnetzwerk verbleibt. Damit wird ein sukzessives Testen der unterschiedlichen Komponenten eines Testcodes möglich.

Gemäß einer Ausführungsform des Kommunikationsnetzwerks ist der Schalter ferner ausgebildet, die erste Netzwerkentität und die zweite Netzwerkentität des gekapselten Untersubnetzwerks mit der dritten Netzwerkentität außerhalb des Untersubnetzwerks selektiv zusammenzuschalten.
Dies bietet den Vorteil, dass durch den Schalter eine flexible Konfiguration des Subnetzes möglich wird. Durch den Schalter können die Netzwerkfunktionen im gekapselten Untersubnetzwerk mit den Netzwerkfunktionen außerhalb des Untersubnetzwerks zusammengeschaltet bzw. gekoppelt oder vernetzt werden. Damit wird eine dynamische Zusammenstellung der einzelnen Netzwerkfunktionen innerhalb und außerhalb des Untersubnetzwerks effizient realisierbar. Ein Testen des Untersubnetzwerks kann damit effizienter und weniger zeitaufwendig ausgeführt werden.
Gemäß einem zweiten Aspekt betrifft die Erfindung ein Verfahren zum Ausführen einer ersten Netzwerkfunktion in einem gekapselten Untersubnetzwerk eines Kommunikationsnetzwerks mit einer Mehrzahl von Subnetzwerken, mit folgenden Schritten: Formen eines gekapselten Untersubnetzwerks in dem Subnetzwerk, so dass das gekapselte Untersubnetzwerk in dem Subnetzwerk kommunikationstechnisch gekapselt angeordnet ist; Anordnen einer ersten Netzwerkentität, welche ausgebildet ist, eine erste Netzwerkfunktion des Subnetzwerks auszuführen, innerhalb des Untersubnetzwerks; und Überwachen der Ausführung der ersten Netzwerkfunktion durch die erste Netzwerkentität in dem gekapselten Untersubnetzwerk durch einen Funktionsmanager.

Das gekapselte Untersubnetzwerk umfasst zumindest eine Schnittstelle, die ausgebildet ist, das gekapselte Untersubnetzwerk mit dem Subnetzwerk zu koppeln, wobei die kommunikationstechnische Kapselung eine Kommunikation von dem Untersubnetzwerk über die zumindest eine Schnittstelle des Untersubnetzwerks zu dem Subnetzwerk vorsieht, jedoch keine Kommunikation unter Umgehung der zumindest einen Schnittstelle des Untersubnetzwerks von dem Untersubnetzwerk zu dem Subnetzwerk. Aufgrund des Subnetzwerk-Aufbaus des Kommunikationsnetzwerks kann das Verfahren die Leistungsfähigkeit der Kommunikation steigern. Insbesondere kann mit dem Verfahren ein höherer Datendurchsatz, eine geringere Verzögerung, eine besonders hohe Zuverlässigkeit, eine weitaus höhere Verbindungsdichte und ein größerer Mobilitätsbereich der Kommunikation erlangt werden.

Die Realisierung des gekapselten Untersubnetzwerks innerhalb des Subnetzwerks ermöglicht es, Funktionscode auf den Komponenten des Untersubnetzwerks laufen zu lassen ohne die restlichen Komponenten des Subnetzwerks außerhalb des gekapselten

Untersubnetzwerks zu beeinflussen. Diese erhöht die Stabilität des gesamten Netzwerks, beispielsweise für den Fall, dass in dem gekapselten Untersubnetzwerk Testcode geladen wird, dessen Verhalten im Feldtest überprüft werden soll oder für den Fall, dass Fremdcode eines anderen Netzwerkbetreibers auf dem Untersubnetzwerk geladen wird, dessen Verhalten im Verhältnis zum eigenen Code des Heimatnetzbetreibers nicht vorhersagbar ist. Der Aufbau des Subnetzwerks mit gekapseltem Untersubnetzwerk steigert die Flexibilität des gesamten Kommunikationsnetzwerks und zugleich ihre Zuverlässigkeit, da mögliche Instabilitäten sich nur lokal begrenzt (d.h. innerhalb des gekapselten Untersubnetzwerks) auswirken.

Zugleich gewährleistet das Überwachen durch den Funktionsmanager eine schnelle Erkennung von Fehlerzuständen oder Unregelmäßigkeiten in den Komponenten des Untersubnetzwerks, so dass schnell auf das Vorhandensein solcher Zustände reagiert werden kann.

Gemäß einer Ausführungsform des Verfahrens ist das Kommunikationsnetzwerk ein Netzwerk einer fünften Generation (5G) oder einer weiteren Generation, und das Subnetzwerk ist ein Slice des Kommunikationsnetzwerkes.

Damit können alle Vorteile der 5G Netzstruktur realisiert werden, wie beispielsweise höhere Funkfrequenzen mit höherem Datendurchsatz, neue Anwendungen, wie beispielsweise Internet der Dinge, spezielle Fähigkeiten wie z.B. geringere Laufzeit, welche über das hinausgehen was 4G Kommunikationsnetze fähig sind zu leisten. Das Kommunikationsnetz kann ein Ende-zu-Ende System bieten, das sämtliche Netzwerkaspekte beinhaltet mit einem hohen Grad an Konvergenz. Ferner können die existierenden Zugangsmechanismen und deren mögliche Weiterentwicklungen vollständig genutzt werden.

Weitere Ausführungsbeispiele werden Bezug nehmend auf die beiliegenden Zeichnungen erläutert. Es zeigen:
Fig. 1 eine schematische Darstellung einer 5G Systemarchitektur 100;
Fig. 2 eine schematische Darstellung eines 5G-Kommunikationsnetzwerks mit mehreren Slices (Netzwerkscheiben) 200;
Fig. 3 eine schematische Darstellung eines Kommunikationsnetzwerkes 300 gemäß einer beispielhaften Ausführungsform mit einem 310 von mehreren Subnetzwerken, welches ein gekapseltes Untersubnetzwerk 320 umfasst, in dem eine Netzwerkentität 321 angeordnet ist, die eine erste Netzwerkfunktion ausführt;
Fig. 4 eine schematische Darstellung eines Kommunikationsnetzwerkes 400 gemäß einer beispielhaften Ausführungsform, das ein Beispiel einer Realisierung des Kommunikationsnetzwerkes 300 gemäß Figur 3 darstellt;
Fig. 5 eine schematische Darstellung eines Kommunikationsnetzwerkes 500 gemäß einer beispielhaften Ausführungsform, bei dem das Untersubnetzwerk 320 durch einen Bypass überbrückbar ist;
Fig. 6 eine schematische Darstellung eines Kommunikationsnetzwerkes 600 gemäß einer beispielhaften Ausführungsform, mit einem Schalter 503 zur Steuerung des Bypasses gemäß Figur 5;
Fig. 7 eine schematische Darstellung eines Kommunikationsnetzwerkes 700 gemäß einer beispielhaften Ausführungsform, bei dem ein Schalter 603 die Netzwerkfunktionen der einzelnen Netzwerkentitäten innerhalb und außerhalb des gekapselten Untersubnetzwerks selektiv auswählt;
Fig. 8 eine schematische Darstellung eines Kommunikationsnetzwerkes 800 gemäß einer beispielhaften Ausführungsform, bei dem ein Schalter 703 die Ein- und Ausgänge der Netzwerkfunktionen der einzelnen Netzwerkentitäten innerhalb und außerhalb des gekapselten Untersubnetzwerks vernetzt; und
Fig. 9 eine schematische Darstellung eines Verfahrens 900 zum Ausführen einer ersten Netzwerkfunktion in einem gekapselten Untersubnetzwerk eines Kommunikationsnetzwerkes mit einer Mehrzahl an Subnetzwerken gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können, In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

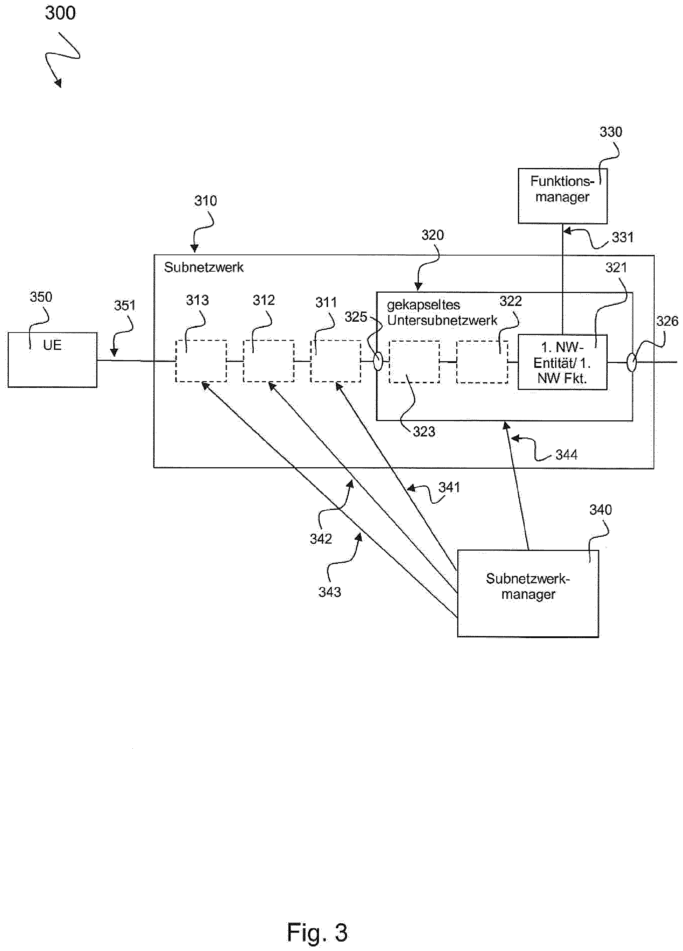

Fig. 3 ist eine schematische Darstellung eines Kommunikationsnetzwerkes 300 gemäß einer beispielhaften Ausführungsform mit einem 310 von mehreren Subnetzwerken, welches ein gekapseltes Untersubnetzwerk 320 umfasst, in dem eine Netzwerkentität 321 angeordnet ist, die eine erste Netzwerkfunktion ausführt.

Die im Folgenden beschriebenen Netzwerkfunktionen können beispielsweise aus einer Bibliothek von Funktionen stammen, die innerhalb eines konvergierten Netzwerks in Form von Bausteinen einer modularen Architektur benötigt werden. Diese Netzwerkfunktionen können beispielsweise Funktionen der Aktivierungsschicht 104, wie oben zu den Figuren 1 und 2 beschrieben, umfassen, die durch Softwaremodule realisiert werden können, die von einem Aufbewahrungsort der gewünschten Lokation abgerufen werden können, und einen Satz von Konfigurationsparametern für bestimmte Teile des Netzwerks, z.B. den Funkzugang. Diese Netzwerkfunktionen und Fähigkeiten können auf Anforderung durch die Management- & Instrumentierungsebene 106 aufgerufen werden, beispielweise durch Nutzung der dafür vorgesehenen APIs.

Das Kommunikationsnetzwerk 300 umfasst eine Mehrzahl von Subnetzwerken, von denen eines 310 beispielhaft für alle anderen in Figur 3 dargestellt ist. Das im Folgenden der Einfachheit halber als Subnetzwerk 310 oder Subnetz bezeichnete Subnetzwerk der Mehrzahl an Subnetzwerken umfasst ein gekapseltes Untersubnetzwerk 320, eine erste Netzwerkentität 321 und einen Funktionsmanager 330. Auch die anderen in Figur 3 nicht dargestellten können (müssen aber nicht) diese Komponenten umfassen.

Das gekapselte Untersubnetzwerk 320 ist in dem Subnetzwerk 310 kommunikationstechnisch gekapselt angeordnet. Die Bezeichnung Untersubnetzwerk 320 bedeutet, dass es sich um ein weiteres Subnetzwerk des genannten Subnetzwerks 310 handelt, das unterhalb oder innerhalb des Subnetzwerks 310 angeordnet ist. Diese Bezeichnung soll es von den weiteren (nicht in Figur 3 dargestellten) Subnetzwerken unterscheiden, die jeweils auch eigene Untersubnetzwerke umfassen können. Kommunikationstechnisch gekapselt bedeutet hier, dass ein Kommunikationspfad von den Komponenten des Untersubnetzwerks über die Schnittstellen des Untersubnetzwerks zu dem Subnetzwerk läuft, jedoch keine direkte Kommunikation (d.h. unter Umgehung der Schnittstellen des Untersubnetzwerks) von den Komponenten des Untersubnetzwerks zu Komponenten des Subnetzwerks oder zu Komponenten außerhalb des Subnetzwerks, beispielsweise zu anderen (nicht in Fig. 3 dargestellten) Subnetzwerken, vorgesehen ist.

Die erste Netzwerkentität 321 ist dafür ausgebildet, um eine erste Netzwerkfunktion des Subnetzwerks 320 auszuführen. Die erste Netzwerkentität 321 ist innerhalb des Untersubnetzwerks 320 angeordnet.

Der Funktionsmanager 330 überwacht die Ausführung der ersten Netzwerkfunktion durch die erste Netzwerkentität 321 in dem gekapselten Untersubnetzwerk 320.

Das Kommunikationsnetzwerk 300 kann beispielsweise ein Netzwerk einer fünften Generation (5G) oder einer weiteren Generation sein, wie z.B. in den Figuren 1 und 2 beschrieben. Das Subnetzwerk 310 kann ein Slice des Kommunikationsnetzwerkes 300 sein.

Die erste Netzwerkfunktion kann beispielsweise einen ersten Softwarecode zum Betreiben der ersten Netzwerkentität 321 umfassen. Der Funktionsmanager 330 kann den ersten Softwarecode der ersten Netzwerkfunktion auf die erste Netzwerkentität 321 über die Schnittstelle 331 laden und eine Ausführung des ersten Softwarecodes auf der ersten Netzwerkentität 321 steuern und überwachen.

Ferner kann das Subnetzwerk 310 eine zweite Netzwerkentität 322 umfassen, welche eine zweite Netzwerkfunktion des Subnetzwerks 310 ausführt, wobei die zweite Netzwerkentität 322 innerhalb des Untersubnetzwerks 320 angeordnet ist. Das Subnetzwerk 310 kann zusätzlich weitere Netzwerkentitäten 323 umfassen (von denen eine vierte Netzwerkentität 323 in Fig. 3 dargestellt ist), welche jeweils weitere Netzwerkfunktionen des Subnetzwerks 310 ausführen, wobei die weiteren Netzwerkentitäten 323 innerhalb des Untersubnetzwerks 320 angeordnet sind.

Der Funktionsmanager 330 kann einen zweiten Softwarecode zum Betreiben der zweiten Netzwerkentität 322 entsprechend der zweiten Netzwerkfunktion auf die zweite Netzwerkentität 322 laden und eine Ausführung des zweiten Softwarecodes auf der zweiten Netzwerkentität 322 steuern und überwachen, z.B. über eine (nicht eingezeichnete) Schnittstelle zu der zweiten Netzwerkentität 322.

Der Funktionsmanager 330 kann die zweite Netzwerkfunktion mit beispielsweise der ersten Netzwerkfunktion oder den weiteren Netzwerkfunktionen von weiteren Netzwerkentitäten 323 innerhalb des gekapselten Untersubnetzwerks 320 vernetzen.

Das Subnetzwerk 310 kann eine dritte Netzwerkentität 311 umfassen, welche ausgebildet ist, eine dritte Netzwerkfunktion des Subnetzwerks 310 auszuführen, wobei die dritte Netzwerkentität 311 außerhalb des Untersubnetzwerks 320 angeordnet ist. Daneben kann das Subnetzwerk 310 weitere Netzwerkentitäten (beispielsweise eine fünfte 312 und eine sechste 313) außerhalb des gekapselten Untersubnetzwerks 320 umfassen, die jeweils entsprechende Netzwerkfunktionen ausführen können.

Der Funktionsmanager 330 kann den ersten Softwarecode der ersten Netzwerkfunktion und/oder den zweiten Softwarecode der zweiten Netzwerkfunktion ohne Beeinflussung der dritten Netzwerkfunktion ausführen, steuern, überwachen und/oder auf seine Funktionsfähigkeit überprüfen.

Das gekapselte Untersubnetzwerk 320 kann eine oder mehrere Schnittstellen 325, 326 aufweisen, welche das gekapselte Untersubnetzwerk 320 mit dem Subnetzwerk 310 koppeln und/oder das gekapselte Untersubnetzwerk 320 mit externen Netzwerkkomponenten koppeln.

Das Kommunikationsnetzwerk 300 umfasst ferner einen Subnetzwerkmanager 340, der dem Subnetzwerk 310 zugeordnet ist. Der Subnetzwerkmanager 340 kann das gekapselte Untersubnetzwerk 320 über die zumindest eine Schnittstelle 325 beispielsweise mit der dritten Netzwerkfunktion der dritten Netzwerkentität 311 vernetzen. Zusätzlich oder alternativ ist eine Vernetzung mit den weiteren Netzwerkfunktionen der weiteren Netzwerkentitäten 312, 313 außerhalb des gekapselten Untersubnetzwerks möglich. Der Subnetzwerkmanager 340 kann die dritte Netzwerkfunktion der dritten Netzwerkentität 311 über die Schnittstelle 341 steuern und überwachen. Zusätzlich kann der Subnetzwerkmanager 340 die weiteren Netzwerkfunktionen der weiteren Netzwerkentitäten 312, 313 außerhalb des gekapselten Untersubnetzwerks 320 über die Schnittstellen 342, 343 steuern und überwachen. Weiterhin kann der Subnetzwerkmanager 340 das gekapselte Untersubnetzwerk 320 über die Schnittstelle 344 steuern und überwachen.

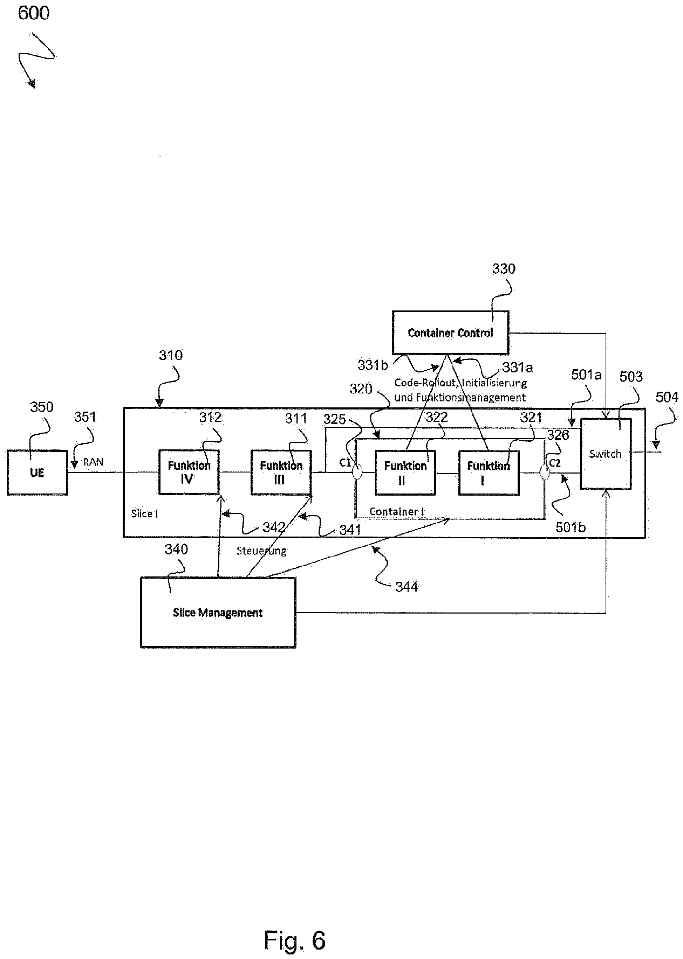

Das Kommunikationsnetzwerk 300 kann einen Schalter, wie beispielsweise zu Figur 6 näher beschrieben, umfassen, mit dem in einer ersten Schalterstellung das gekapselte Untersubnetzwerk 320 in das Subnetzwerk 310 geschaltet werden kann, und mit dem in einer zweiten Schalterstellung das gekapselte Untersubnetzwerk 320 in dem Subnetzwerk 310 überbrückt werden kann.

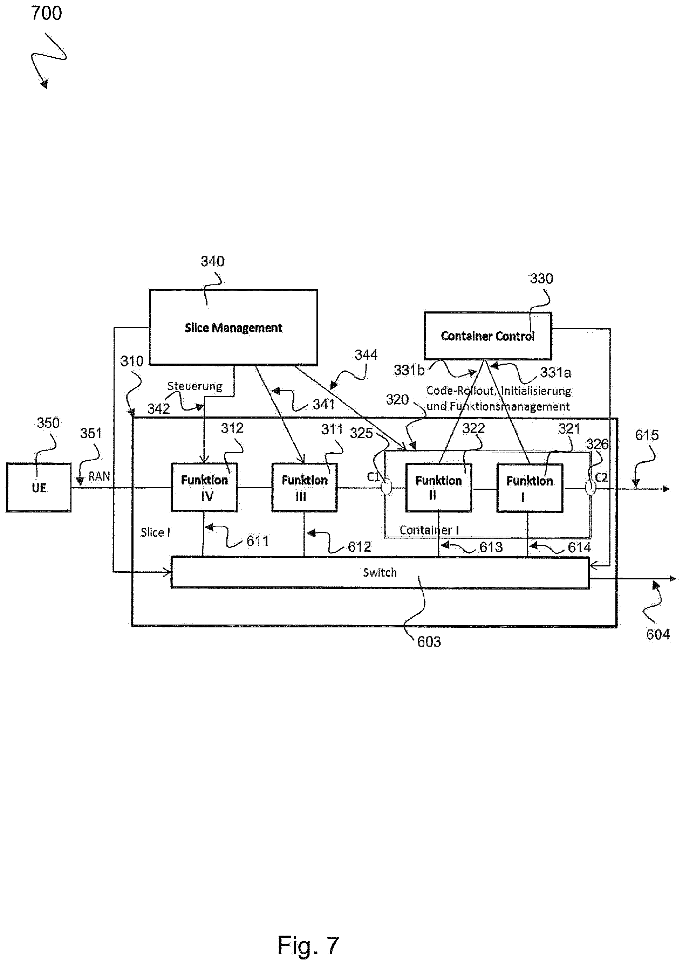

Der Schalter kann beispielsweise wie in Figur 7 näher beschrieben, ausgebildet sein, die erste Netzwerkentität 321 und die zweite Netzwerkentität 322 des gekapselten Untersubnetzwerks 320 selektiv in das Subnetzwerk 310 zu schalten oder zu überbrücken.

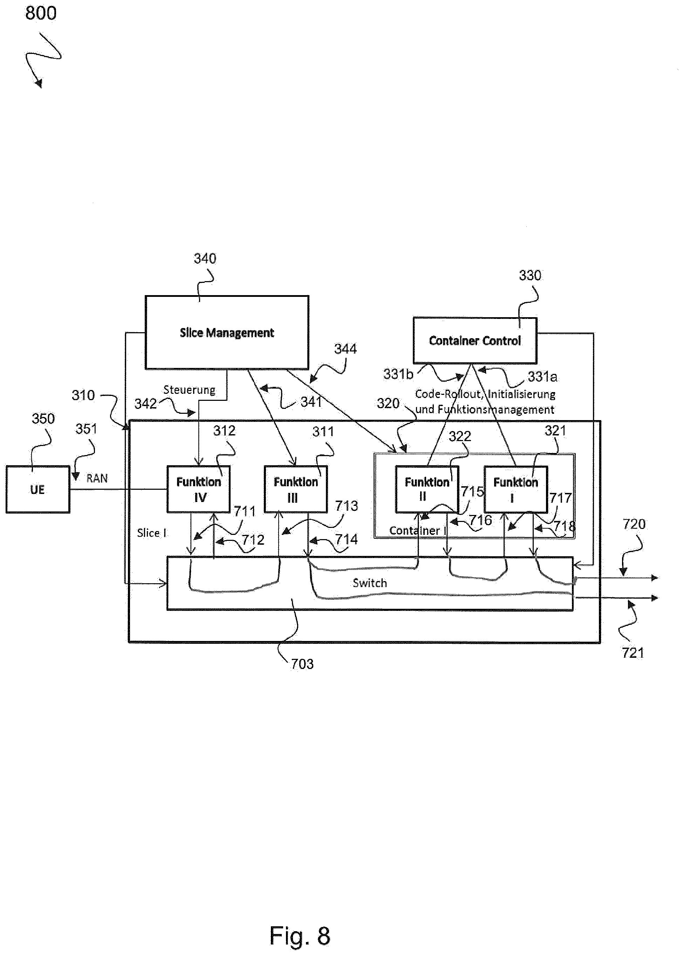

Der Schalter kann beispielsweise wie in Figur 8 näher beschrieben, ausgebildet sein, die erste Netzwerkentität 321 und die zweite Netzwerkentität 322 (und/oder weitere Netzwerkentitäten 323) des gekapselten Untersubnetzwerks 320 mit der dritten Netzwerkentität 311 (und/oder weiteren Netzwerkentitäten 312, 313) außerhalb des Untersubnetzwerks 320 selektiv zusammenzuschalten.

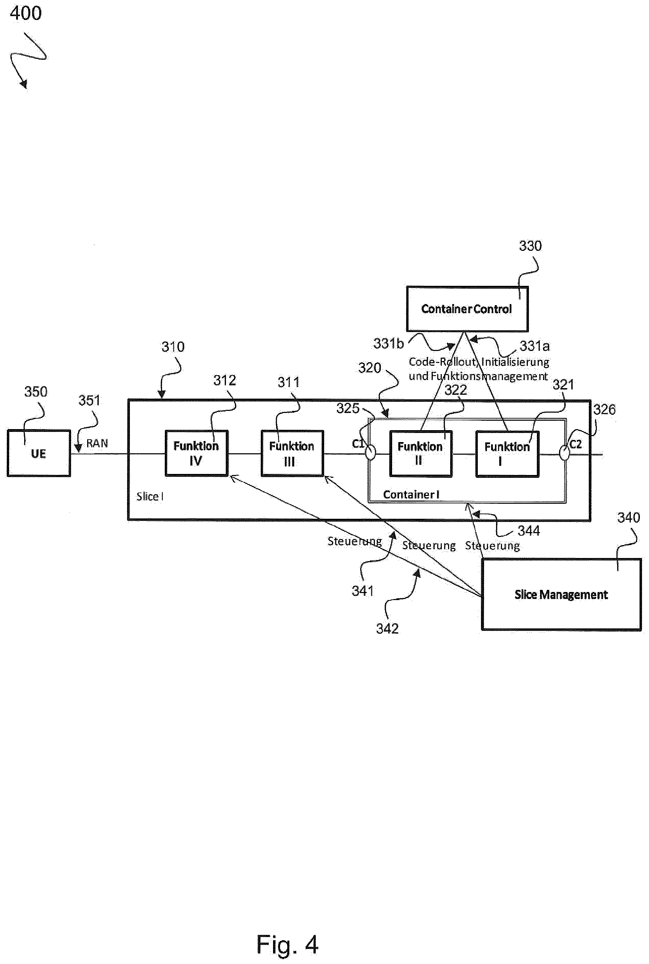

Fig. 4 ist eine schematische Darstellung eines Kommunikationsnetzwerkes 400 gemäß einer beispielhaften Ausführungsform, das ein Beispiel einer Realisierung des Kommunikationsnetzwerkes 300 gemäß Figur 3 darstellt.

Das Subnetzwerk 310 wird hier und in den folgenden Figuren gemäß der 5G Notation aus den Figuren 1 und 2 als Slice bezeichnet. Das Untersubnetzwerk 320 wird als Container bezeichnet. Der Funktionsmanager 330 wird als Container Control bzw. Container Control Steuerung bezeichnet. Der Subnetzwerkmanager 340 wird als Slice Management bezeichnet. Die Netzwerkfunktionen werden allgemein als Funktionen bezeichnet, die auf den jeweiligen Netzwerkentitäten 321, 322, 311, 312 ausgeführt werden.

Die Grundidee des hier vorgestellten Kommunikationsnetzwerks mit mehreren Subnetzwerken bzw. Slices besteht darin, dass Slices einen oder mehrere gekapselte Ausführungsumgebungen (Container bzw. gekapseltes Untersubnetzwerk) aufweisen können, in denen Anwender ("Slice User") eigenen bzw. nutzungsspezifischen Funktionscode in eigener Verantwortung installieren, verwalten und ausführen lassen können.

Der Container bietet eine abgesicherte Umgebung, die mit Demarkation die Integration von Fremdcode auf einer zum Slice-Betrieb betreiberseitig bereitgestellten Infrastruktur-Plattform ermöglicht. Im Container enthaltene Funktionen (bzw. Netzwerkfunktionen) kann der Slice User zur Laufzeit nicht nur überwachen, sondern in eigener Verantwortung einbringen (Rollout), verändern und operativ verwalten. Über geeignete Schnittstellen 331a, 331b wird das Einbringen des Codes, die Steuerung der Funktionen inkl. Statuskontrolle, und die Vernetzung mit anderen Funktionen der Slice realisiert.

Die Grundarchitektur ist in Figur 4 dargestellt. Die Container Control Steuerung 330, in Verantwortung des Slice Users, hat volle Kontrolle über den gesamten Lebenszyklus des Software-Codes der Funktionen und ihres operativen Ausführungszustandes innerhalb des Containers. Container Control 330 kontrolliert die Vernetzung aller im Slice Container 320 betriebenen Funktionen, sowie deren Vernetzung mit externen Übergabeschnittstellen (z.B. C1, 325 und C2, 326).

Der Container 320 wird durch Slice Management 340 (bzw. den Subnetzwerkmanager) kontrolliert, welches alle funktionalen Ressourcen innerhalb der Slice 310 steuert. Im Gegensatz zu den in der Slice regulär betriebenen Funktionen (Funktion III, 311 und Funktion IV, 312), die von Slice Management 340 gesteuert werden, kontrolliert das Slice Management 340 nur den oder die Container 320 als Block, nicht jedoch die darin enthaltenen Funktionen 321, 322 und deren Status (keine Innensicht). Slice Management 340 steuert die Vernetzung des Containers 320 über die Container-Schnittstellen (C1, 325 und C2, 326) mit anderen Funktionen innerhalb der Slice 310.

Slice-Management 340 ist beispielsweise, im Kontext der NGMN-Architektur (siehe z.B. Figuren 1 und 2), in der Ressourcensteuerung oberhalb des Infrastruktur-Layers verortet und übernimmt die Slice- oder Ressourcensteuerung.

Das User Equipment (UE) 350 bzw. das Kommunikationsendgerät kann über das Radio Access Network (RAN) 351 gleichzeitig mit mehreren Slices verbunden sein.

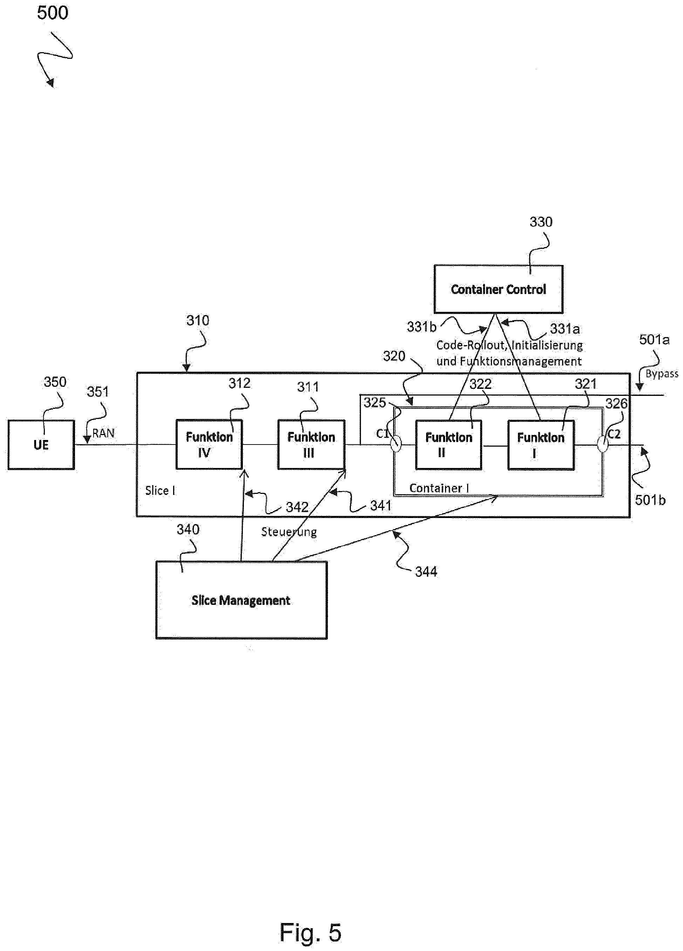

Fig. 5 ist eine schematische Darstellung eines Kommunikationsnetzwerkes 500 gemäß einer beispielhaften Ausführungsform. Das Kommunikationsnetzwerk 500 entspricht dem Kommunikationsnetzwerk 400, wobei zusätzlich zu den in Fig. 4 beschriebenen Funktionalitäten des Kommunikationsnetzwerks 400 das Untersubnetzwerk 320 durch einen Bypass 501a überbrückbar ist.

Der Slice-Container 320 kann die Funktionen 321,322 bypassen bzw. überbrücken, so dass ein sicherer Slice-Test unter realen Bedingungen durchgeführt werden kann. Erfolgt ein Crash bzw. Zusammenbruch oder auch nur ein Fehlverhalten des Containers, so wird dadurch der Slice 310 als Ganzes nicht beeinträchtigt, sondern lediglich die Komponenten innerhalb des Containers bzw. Untersubnetzwerks 320.

Bei Überbrückung des Containers 320 mit dem Bypass wird der Eingang des Containers 320 auf den Ausgang des Slice 310 geschaltet, ansonsten wird der Ausgang des Containers 320 auf den Ausgang des Slice 310 geschaltet.

Fig. 6 ist eine schematische Darstellung eines Kommunikationsnetzwerkes 600 gemäß einer beispielhaften Ausführungsform. Das Kommunikationsnetzwerk 600 entspricht dem Kommunikationsnetzwerk 500, wobei zusätzlich zu den in Fig. 5 beschriebenen Funktionalitäten des Kommunikationsnetzwerks 500 ein ausgangsseitiger Schalter bzw. Switch 503 zur Steuerung des Bypasses bzw. zur Überbrückung des Untersubnetzwerks 320 durch den Schalter 503 implementiert ist. Mit dem Schalter 503 kann der Ausgang 501b des Containers 320 bei erfolgreichem Test auf den Ausgang des Slice 310 geschaltet werden. Bei nicht erfolgreichem Test oder bei noch laufendem Test kann der Eingang des Containers 320 auf den Ausgang des Slice 310 geschaltet werden. Der Schalter 503 ist über Steuersignale von der Container Control Steuerung 330 und/oder von dem Slice Management 340 ansteuerbar.

Der Switch 503 kann ein Teil des Slice 310 sein. Slice Management 340 bzw. der Subnetzwerkmanager kann den Switch (ggf. optional) steuern. Damit kann gezeigt werden, dass es sich um eine "an sich reguläre" Switch-Funktion innerhalb der Slice 310 handelt, die allerdings dem Container 320 (als Bypass-Umschaltung) zugeordnet wurde und für diesbezügliche Zwecke auch operativ Container-Control 330 unterstellt werden kann. Mit der damit implementierten sicheren Testumgebung können zum einen der Netzbetreiber selbst als auch andere Netzbetreiber oder Kunden des Netzbetreibers ihre eigenen (d.h. ihnen zugeordneten) Slices sicher austesten.

Fig. 7 ist eine schematische Darstellung eines Kommunikationsnetzwerkes 700 gemäß einer beispielhaften Ausführungsform.

Das Kommunikationsnetzwerk 700 entspricht dem Kommunikationsnetzwerk 600, wobei zusätzlich zu den in Fig. 6 beschriebenen Funktionalitäten des Kommunikationsnetzwerks 600 der Schalter 603 die Netzwerkfunktionen der einzelnen Netzwerkentitäten innerhalb und außerhalb des gekapselten Untersubnetzwerks selektiv auswählen kann.

Die alternative Variante der Figur 7 besteht darin, die Funktionen 321, 322, 311, 312 selbst mit einem zweiten Ausgang 614, 613, 612, 611 auszustatten und die zweiten Ausgänge 614, 613, 612, 611 jeweils mit dem Switch 603 in der Slice 310 zu verbinden. Dadurch kann das Slice Management 340 die Bypass-Abzweigung beliebig auswählen und neben dem Ausgang 615 über den Container 320 als zweiten Ausgang 604 des Slice 310 bereitstellen. Das ermöglicht eine beliebige Zusammenstellung der Funktionen in dem Container 320.

Fig. 8 ist eine schematische Darstellung eines Kommunikationsnetzwerkes 800 gemäß einer beispielhaften Ausführungsform.

Das Kommunikationsnetzwerk 800 entspricht dem Kommunikationsnetzwerk 700, wobei zusätzlich zu den in Fig. 7 beschriebenen Funktionalitäten des Kommunikationsnetzwerks 700 der Schalter 703 die Ein- und Ausgänge der Netzwerkfunktionen der einzelnen Netzwerkentitäten innerhalb und außerhalb des gekapselten Untersubnetzwerks vernetzt.

Diese Variante ermöglicht auch eine dynamische Zusammenstellung der Container-Funktionen, beispielsweise durch eine Schaltmatrix des Schalters 703. In Fig. 8 sind zwei mögliche Zustände einer solchen Schaltmatrix aufgezeigt.

Die Ausgänge der Funktionen der Netzwerkentitäten 321, 322, 311, 312 sind jeweils auf den Switch 703 geführt. Die Funktionen der Slice 310 werden durch den Switch 703 zusammengeschaltet. Die Steuerung dieser Zusammenschaltung übernimmt das Slice Management 340. Somit kann der Container 320 beliebig und vor allem dynamisch zusammengestellt werden.

Die eingezeichneten Verbindungen zeigen die Verschaltungen durch den Switch 703, welcher ein Matrix-Switch sein kann. Die Realisierung ist einfach, in jeder Slice ist eine weitere Funktion enthalten, welche den Switch 703 realisiert. Es können auch mehrere solcher Switches 703 vorgesehen sein.

Beispielsweise kann in einer ersten Schalterstellung des Schalters 703 der Ausgang 711 von Funktion IV auf den Eingang 713 von Funktion III geschaltet sein, der Ausgang 714 von Funktion III kann auf den Eingang 715 von Funktion II geschaltet sein, der Ausgang 716 von Funktion II kann auf den Eingang 717 von Funktion I geschaltet sein und der Ausgang 718 von Funktion I kann auf den ersten Ausgang 720 des Schalters 703 bzw. den Ausgang des Slice 310 geschaltet sein.

Beispielsweise kann in einer zweiten Schalterstellung des Schalters 703 der Ausgang 711 von Funktion IV auf den Eingang 713 von Funktion III geschaltet sein und der Ausgang 714 von Funktion III kann auf den zweiten Ausgang 721 des Schalters 703 bzw. den Ausgang des Slice 310 geschaltet sein.

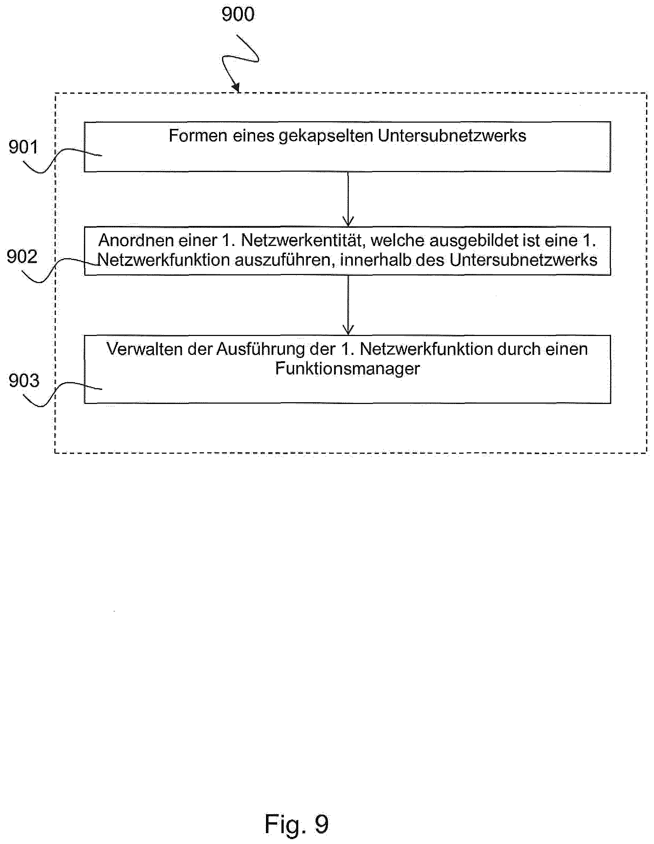

Fig. 9 ist eine schematische Darstellung eines Verfahrens 900 zum Ausführen einer ersten Netzwerkfunktion in einem gekapselten Untersubnetzwerk eines Kommunikationsnetzwerkes mit einer Mehrzahl an Subnetzwerken gemäß einer beispielhaften Ausführungsform.

Das Verfahren 900 umfasst in einem ersten Schritt 901 das Formen eines gekapselten Untersubnetzwerks in dem Subnetzwerk, so dass das gekapselte Untersubnetzwerk in dem Subnetzwerk kommunikationstechnisch gekapselt angeordnet ist.

Das Verfahren 900 umfasst in einem zweiten Schritt 902 das Anordnen einer ersten Netzwerkentität, welche ausgebildet ist, eine erste Netzwerkfunktion des Subnetzwerks auszuführen, innerhalb des Untersubnetzwerks.

Das Verfahren 900 umfasst in einem dritten Schritt 903 das Verwalten, d.h. Steuern und Überwachen, der Ausführung der ersten Netzwerkfunktion durch die erste Netzwerkentität in dem gekapselten Untersubnetzwerk durch einen Funktionsmanager.

Das Verfahren 900 kann beispielsweise in einem Kommunikationsnetzwerk, wie in den Figuren 1 bis 8 beschrieben, eingesetzt werden.

Das Kommunikationsnetzwerk 300 kann beispielsweise ein Netzwerk einer fünften Generation (5G) oder einer weiteren Generation sein, wie z.B. in den Figuren 1 und 2 beschrieben. Das Subnetzwerk 310 kann ein Slice des Kommunikationsnetzwerkes 300 sein.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 9 beschriebene Verfahren 900 oder die zu den Figuren 1 bis 8 beschriebenen Vorgänge ausgeführt werden kann, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 900 auszuführen oder die Netzkomponenten der in den Figuren 1 bis 8 beschriebenen Kommunikationsnetze zu implementieren bzw. zu steuern.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz wie in den Figuren 1 bis 9 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: 5G Systemarchitektur
- 101:: Zugangsgerät, Kommunikationsendgerät, UE
- 102:: Zugangstechnologie
- 103:: Anwendungsschicht
- 104:: Aktivierungsschicht
- 105:: Infrastruktur & Ressourcenschicht
- 106:: Management & Instrumentierungsschicht

- 200:: 5G Kommunikationsnetzwerk mit mehreren Slices
- 210a:: erste Slice Instanz
- 210b:: erste Netzwerk Slice
- 211a:: zweite Slice Instanz
- 211b:: zweite Netzwerk Slice
- 212a:: dritte Slice Instanz
- 212b:: dritte Netzwerk Slice
- 213:: Slice Komposition
- 221:: abstrahierte Objekte
- 222:: virtuelle Netzwerkfunktionen
- 223:: kombinierte Objekte
- 224:: aggregierte Objekte
- 225:: Objektbibliothek
- 231:: Zugangsknoten
- 232:: Zugangsknoten
- 233:: Zugangsknoten
- 234:: virtueller Netzwerkknoten
- 235:: virtueller Netzwerkknoten
- 236:: virtueller Netzwerkknoten
- 237:: virtueller Netzwerkknoten
- 238:: Computerknoten
- 239:: Computerknoten
- 240:: Computerknoten
- 251:: Infrastrukturdienste
- 300:: Kommunikationsnetzwerk bzw. Kommunikationssystem
- 310:: erstes Subnetzwerk bzw. Slice I oder einfach Subnetzwerk
- 311:: dritte Kommunikationsentität mit dritter Netzwerkfunktion bzw. Funktion III
- 312:: weitere (vierte) Kommunikationsentität mit weiterer (vierter) Netzwerkfunktion bzw. Funktion IV
- 313:: weitere (fünfte) Kommunikationsentität mit weiterer (fünfter) Netzwerkfunktion
- 320:: gekapseltes Untersubnetzwerk bzw. Container
- 321:: erste Kommunikationsentität (im Untersubnetzwerk) mit erster Netzwerkfunktion bzw. Funktion I
- 322:: zweite Kommunikationsentität (im Untersubnetzwerk) mit zweiter Netzwerkfunktion bzw. Funktion II
- 323:: weitere (sechste) Kommunikationsentität (im Untersubnetzwerk) mit weiterer (sechster) Netzwerkfunktion
- 325:: (erste) Schnittstelle des gekapselten Untersubnetzwerks bzw. C1
- 326:: (zweite) Schnittstelle des gekapselten Untersubnetzwerks bzw. C2
- 330:: Funktionsmanager bzw. Container Control Steuerung
- 331:: Schnittstelle von Funktionsmanager zur ersten Netzwerkentität
- 340:: Subnetzwerkmanager bzw. Slice Management
- 341:: Steuersignal von Subnetzwerkmanager zur dritten Netzwerkentität 311
- 342:: Steuersignal von Subnetzwerkmanager zur vierten Netzwerkentität 312
- 343:: Steuersignal von Subnetzwerkmanager zur fünften Netzwerkentität 313
- 344:: Steuersignal von Subnetzwerkmanager zum gekapselten Untersubnetzwerk 320
- 350:: Kommunikationsendgerät, z.B. UE
- 351:: Kommunikationszugang des UE zu erstem Subnetzwerk 310, z.B. über RAN (Radio Access Network)

- 400:: Kommunikationsnetzwerk bzw. Kommunikationssystem
- 331a:: Schnittstelle von Funktionsmanager bzw. Container Control Steuerung zur ersten Netzwerkentität 321 für z.B. Code-Rollout, Initialisierung und Funktionsmanagement
- 331b:: Schnittstelle von Funktionsmanager bzw. Container Control Steuerung zur zweiten Netzwerkentität 322 für z.B. Code-Rollout, Initialisierung und Funktionsmanagement

- 500:: Kommunikationsnetzwerk bzw. Kommunikationssystem
- 501a:: Bypass zur Überbrückung des gekapselten Untersubnetzwerks 320
- 501b:: Ausgang aus Subnetzwerk 310 ohne Bypass, d.h. über das gekapselte Untersubnetzwerk 320

- 600:: Kommunikationsnetzwerk bzw. Kommunikationssystem
- 503:: Schalter bzw. Switch zur Steuerung des Bypass zur Überbrückung des gekapselten Untersubnetzwerks 320
- 504:: Ausgang aus Subnetzwerk 310

- 700:: Kommunikationsnetzwerk bzw. Kommunikationssystem
- 603:: Schalter bzw. Switch zur selektiven Auswahl der Netzwerkfunktionen der Netzwerkentitäten innerhalb und außerhalb des gekapselten Untersubnetzwerks 320
- 611:: Steuersignal des Schalters 603 für vierte Netzwerkentität 312
- 612:: Steuersignal des Schalters 603 für dritte Netzwerkentität 311
- 613:: Steuersignal des Schalters 603 für zweite Netzwerkentität 322
- 614:: Steuersignal des Schalters 603 für erste Netzwerkentität 321
- 604: Schalterausgang
- 615:: Ausgang aus Subnetzwerk 310

- 800:: Kommunikationsnetzwerk bzw. Kommunikationssystem
- 703:: Schalter bzw. Switch zur Steuerung der Vernetzung der Netzwerkfunktionen der Netzwerkentitäten innerhalb und außerhalb des gekapselten Untersubnetzwerks 320
- 711:: Ausgangssignal der vierten Netzwerkentität 312
- 712:: Eingangssignal der vierten Netzwerkentität 312
- 713:: Eingangssignal der dritten Netzwerkentität 311
- 714:: Ausgangssignal der dritten Netzwerkentität 311
- 715:: Eingangssignal der zweiten Netzwerkentität 322
- 716:: Ausgangssignal der zweiten Netzwerkentität 322
- 717:: Eingangssignal der ersten Netzwerkentität 321
- 718:: Ausgangssignal der ersten Netzwerkentität 321
- 720:: Schalterausgangssignal bei Vernetzung mit Netzwerkfunktionen des gekapselten Untersubnetzwerks
- 721:: Schalterausgangssignal bei Vernetzung mit Überbrückung der Netzwerkfunktionen des gekapselten Untersubnetzwerks

- 900:: Verfahren zum Ausführen einer ersten Netzwerkfunktion in gekapseltem Untersubnetzwerk
- 901:: erster Schritt: Formen des gekapselten Untersubnetzwerks
- 902:: zweiter Schritt: Anordnen einer 1. Netzwerkentität
- 903:: dritter Schritt: Steuern und Überwachen bzw. Verwalten der Ausführung der 1. Netzwerkfunktion

## Patentansprüche

1. Kommunikationsnetzwerk (300, 400) mit einer Mehrzahl von Subnetzwerken, wobei zumindest ein Subnetzwerk (310) folgendes umfasst:
ein gekapseltes Untersubnetzwerk (320), das in dem Subnetzwerk (310) kommunikationstechnisch gekapselt angeordnet ist;
eine erste Netzwerkentität (321), welche ausgebildet ist, eine erste Netzwerkfunktion des Subnetzwerks (320) auszuführen, wobei die erste Netzwerkentität (321) innerhalb des Untersubnetzwerks (320) angeordnet ist; und
einen Funktionsmanager (330), welcher ausgebildet ist, die Ausführung der ersten Netzwerkfunktion durch die erste Netzwerkentität (321) in dem gekapselten Untersubnetzwerk (320) zu verwalten,
**dadurch gekennzeichnet, dass**
das gekapselte Untersubnetzwerk (320) zumindest eine Schnittstelle (325, 326) umfasst, die ausgebildet ist, das gekapselte Untersubnetzwerk (320) mit dem Subnetzwerk (310) zu koppeln,
wobei die kommunikationstechnische Kapselung eine Kommunikation von dem Untersubnetzwerk (320) über die zumindest eine Schnittstelle (325, 326) des Untersubnetzwerks (320) zu dem Subnetzwerk (310) vorsieht, jedoch keine Kommunikation unter Umgehung der zumindest einen Schnittstelle (325, 326) des Untersubnetzwerks (320) von dem Untersubnetzwerk (320) zu dem Subnetzwerk (310).

2. Kommunikationsnetzwerk (300, 400) nach Anspruch 1,
wobei das Kommunikationsnetzwerk (300) ein Netzwerk einer fünften Generation (5G) oder einer weiteren Generation ist, und wobei das Subnetzwerk (310) ein Slice des Kommunikationsnetzwerkes (300) ist.

3. Kommunikationsnetzwerk (300, 400) nach Anspruch 1 oder 2,
wobei die erste Netzwerkfunktion einen ersten Softwarecode zum Betreiben der ersten Netzwerkentität (321) umfasst.

4. Kommunikationsnetzwerk (300, 400) nach Anspruch 3,
wobei der Funktionsmanager (330) ausgebildet ist, den ersten Softwarecode der ersten Netzwerkfunktion auf die erste Netzwerkentität (321) zu laden und eine Ausführung des ersten Softwarecodes auf der ersten Netzwerkentität (321) zu steuern und zu überwachen (331a).

5. Kommunikationsnetzwerk (300, 400) nach einem der vorstehenden Ansprüche,
wobei das Subnetzwerk (310) eine zweite Netzwerkentität (322) umfasst, welche ausgebildet ist, eine zweite Netzwerkfunktion des Subnetzwerks (310) auszuführen, wobei die zweite Netzwerkentität (322) innerhalb des Untersubnetzwerks (320) angeordnet ist.

6. Kommunikationsnetzwerk (300, 400) nach Anspruch 5,
wobei der Funktionsmanager (330) ausgebildet ist, einen zweiten Softwarecode zum Betreiben der zweiten Netzwerkentität (322) entsprechend der zweiten Netzwerkfunktion auf die zweite Netzwerkentität (322) zu laden und eine Ausführung des zweiten Softwarecodes auf der zweiten Netzwerkentität (322) zu steuern und zu überwachen (331b).

7. Kommunikationsnetzwerk (300, 400) nach Anspruch 6,
wobei der Funktionsmanager (330) ausgebildet ist, die zweite Netzwerkfunktion mit der ersten Netzwerkfunktion zu vernetzen.

8. Kommunikationsnetzwerk (300, 400) nach Anspruch 7,
wobei das Subnetzwerk (310) eine dritte Netzwerkentität (311) umfasst, welche ausgebildet ist, eine dritte Netzwerkfunktion des Subnetzwerks (310) auszuführen, wobei die dritte Netzwerkentität (311) außerhalb des Untersubnetzwerks (320) angeordnet ist.

9. Kommunikationsnetzwerk (300, 400) nach Anspruch 8,
wobei der Funktionsmanager (330) ausgebildet ist, den ersten Softwarecode der ersten Netzwerkfunktion und/oder den zweiten Softwarecode der zweiten Netzwerkfunktion ohne Beeinflussung der dritten Netzwerkfunktion auszuführen.

10. Kommunikationsnetzwerk (300, 400) nach Anspruch 9,
wobei das gekapselte Untersubnetzwerk (320) zumindest eine Schnittstelle (325, 326) umfasst, die ausgebildet ist, das gekapselte Untersubnetzwerk (320) mit dem Subnetzwerk (310) zu koppeln und/oder das gekapselte Untersubnetzwerk (320) mit externen Netzwerkkomponenten zu koppeln.

11. Kommunikationsnetzwerk (300, 400) nach Anspruch 10, mit einem Subnetzwerkmanager (340), der dem Subnetzwerk (310) zugeordnet ist,
wobei der Subnetzwerkmanager (340) ausgebildet ist, das gekapselte Untersubnetzwerk (320) über die zumindest eine Schnittstelle (325) mit der dritten Netzwerkfunktion der dritten Netzwerkentität (311) zu vernetzen,
wobei der Subnetzwerkmanager (340) ferner ausgebildet ist, die dritte Netzwerkfunktion der dritten Netzwerkentität (311) zu steuern und zu überwachen.

12. Kommunikationsnetzwerk (300, 400, 500, 600) nach einem der Ansprüche 8 bis 11, ferner mit:
einem Schalter (503), der ausgebildet ist, in einer ersten Schalterstellung (501b) das gekapselte Untersubnetzwerk (320) in das Subnetzwerk (310) zu schalten und in einer zweiten Schalterstellung (501a) das gekapselte Untersubnetzwerk (320) in dem Subnetzwerk (310) zu überbrücken.

13. Kommunikationsnetzwerk (700) nach Anspruch 12,
wobei der Schalter (603) ferner ausgebildet ist, die erste Netzwerkentität (321) und die zweite Netzwerkentität (322) des gekapselten Untersubnetzwerks (320) selektiv in das Subnetzwerk (310) zu schalten (613, 614) oder zu überbrücken.

14. Kommunikationsnetzwerk (800) nach Anspruch 13,
wobei der Schalter (703) ausgebildet ist, die erste Netzwerkentität (321) und die zweite Netzwerkentität (322) des gekapselten Untersubnetzwerks (320) mit der dritten Netzwerkentität (311) außerhalb des Untersubnetzwerks (320) selektiv zusammenzuschalten.

15. Verfahren (900) zum Ausführen einer ersten Netzwerkfunktion in einem gekapselten Untersubnetzwerk eines Kommunikationsnetzwerks mit einer Mehrzahl von Subnetzwerken, mit folgenden Schritten:
Formen (901) eines gekapselten Untersubnetzwerks in dem Subnetzwerk, so dass das gekapselte Untersubnetzwerk in dem Subnetzwerk kommunikationstechnisch gekapselt angeordnet ist;
Anordnen (902) einer ersten Netzwerkentität, welche ausgebildet ist, eine erste Netzwerkfunktion des Subnetzwerks auszuführen, innerhalb des Untersubnetzwerks; und
Verwalten (903) der Ausführung der ersten Netzwerkfunktion durch die erste Netzwerkentität in dem gekapselten Untersubnetzwerk durch einen Funktionsmanager,
**dadurch gekennzeichnet, dass**
das gekapselte Untersubnetzwerk (320) zumindest eine Schnittstelle (325, 326) umfasst, die ausgebildet ist, das gekapselte Untersubnetzwerk (320) mit dem Subnetzwerk (310) zu koppeln,
wobei die kommunikationstechnische Kapselung eine Kommunikation von dem Untersubnetzwerk (320) über die zumindest eine Schnittstelle (325, 326) des Untersubnetzwerks (320) zu dem Subnetzwerk (310) vorsieht, jedoch keine Kommunikation unter Umgehung der zumindest einen Schnittstelle (325, 326) des Untersubnetzwerks (320) von dem Untersubnetzwerk (320) zu dem Subnetzwerk (310).

## Claims

1. A communication network (300, 400) with a plurality of sub-networks, wherein at least one sub-network (310) comprises the following:
a capsulated sub-sub-network (320) which is arranged communication-technologically capsulated in the sub-network (310);
a first network entity (321) which is designed to perform a first network function of the sub-network (320), wherein the first network entity (321) is arranged within the sub-sub-network (320); and
a function manager (330) which is designed to manage the performing of the first network function by the first network entity (321) in the capsulated sub-sub-network (320),
**characterised in that**
the capsulated sub-sub-network (320) comprises at least one interface (325, 326) which is designed to couple the capsulated sub-sub-network (320) to the sub-network (310),
wherein the communication-technological capsulation provides a communication from the sub-sub-network (320) via the at least one interface (325, 326) of the sub-sub-network (320) to the sub-network (310), but no communication with circumvention of the at least one interface (325, 326) of the sub-sub-network (320) from the sub-sub-network (320) to the sub-network (310).

2. The communication network (300, 400) according to Claim 1,
wherein the communication network (300) is a network of a fifth generation (5G) or of another generation, and wherein the sub-network (310) is a slice of the communication network (300).

3. The communication network (300, 400) according to Claim 1 or 2,
wherein the first network function comprises a first software code operation of the first network entity (321).

4. The communication network (300, 400) according to Claim 3,
wherein the function manager (330) is designed to load the first software code of the first network function onto the first network entity (321) and to control and monitor (331a) an execution of the first software code on the first network entity (321).

5. The communication network (300, 400) according to any one of the preceding claims,
wherein the sub-network (310) comprises a second network entity (322) which is designed to perform a second network function of the sub-network (310), wherein the second network entity (322) is arranged within the sub-sub-network (320).

6. The communication network (300, 400) according to Claim 5,
wherein the function manager (330) is designed to load a second software code for operation of the second network entity (322) corresponding to the second network function onto the second network entity (322) and to control and to monitor (331b) an execution of the second software code on the second network entity (322).

7. The communication network (300, 400) according to Claim 6,
wherein the function manager (330) is designed to crosslink the second network function with the first network function.

8. The communication network (300, 400) according to Claim 7,
wherein the sub-network (310) comprises a third network entity (311) which is designed to perform a third network function of the sub-network (310), wherein the third network entity (311) is arranged outside of the sub-sub-network (320).

9. The communication network (300, 400) according to Claim 8,
wherein the function manager (330) is designed to execute the first software code of the first network function and/or the second software code of the second network function without influencing the third network function.

10. The communication network (300, 400) according to Claim 9,
wherein the capsulated sub-sub-network (320) comprises at least one interface (325, 326) which is designed to couple the capsulated sub-sub-network (320) to the sub-network (310) and/or to couple the capsulated sub-sub-network (320) to external network components.

11. The communication network (300, 400) according to Claim 10, with a sub-network manager (340) which is associated with the sub-network (310)
wherein the sub-network manager (340) is designed to crosslink the capsulated sub-sub-network (320) via the at least one interface (325) with the third network function of the third network entity (311),
wherein the sub-network manager (340) is moreover designed to control and to monitor the third network function of the third network entity (311).

12. The communication network (300, 400, 500, 600) according to any one of Claims 8 to 11, furthermore with:
a switch (503) which is designed to connect, in a first switch position (501b), the capsulated sub-sub-network (320) in the sub-network (310) and to bridge, in a second switch position (501a), the capsulated sub-sub-network (320) in the sub-network (310).

13. The communication network (700) according to Claim 12,
wherein the switch (603) is moreover designed to selectively connect (613, 614) the first network entity (321) and the second network entity (322) of the capsulated sub-sub-network (320) into the sub-network (310) or to bypass them.

14. The communication network (800) according to Claim 13,
wherein the switch (703) is designed to selectively connect the first network entity (321) and the second network entity (322) of the capsulated sub-sub-network (320) together with the third network entity (311) outside of the sub-sub-network (320).

15. A method (900) for performing a first network function in a capsulated sub-sub-network of a communication network with a plurality of sub-networks, with the following steps:
forming (901) of a capsulated sub-sub-network in the sub-network, so that the capsulated sub-sub-network in the sub-network is arranged communication-technologically capsulated;
arranging (902) of a first network entity which is designed to perform a first network function of the sub-network, within the sub-sub-network; and
managing (903) of the performing of the first network function by the first network entity in the capsulated sub-sub-network by a function manager,
**characterised in that**
the capsulated sub-sub-network (320) comprises at least one interface (325, 326) which is designed to couple the capsulated sub-sub-network (320) to the sub-network (310),
wherein the communication-technological capsulation provides a communication from the sub-sub-network (320) via the at least one interface (325, 326) of the sub-sub-network (320) with the sub-network (310), but no communication with circumvention of the at least one interface (325, 326) of the sub-sub-network (320) from the sub-sub-network (320) to the sub-network (310).

## Revendications

1. Réseau de communication (300, 400) avec une pluralité de sous-réseaux, dans lequel au moins un sous-réseau (310) comporte ce qui suit :
un sous-réseau encapsulé (320) qui est disposé encapsulé selon une technique de communication dans le sous-réseau (310) ;
une première entité de réseau (321) qui est conçue pour exécuter une première fonction de réseau du sous-réseau (encapsulé) (320), dans lequel la première entité de réseau (321) est disposée à l'intérieur du sous-réseau (encapsulé) (320) ; et
un gestionnaire de fonctions (330) qui est conçu pour gérer l'exécution de la première fonction de réseau par le biais de la première entité de réseau (321) dans le sous-réseau encapsulé (320),
**caractérisé en ce que**
le sous-réseau encapsulé (320) comporte au moins une interface (325, 326) qui est conçue pour coupler le sous-réseau encapsulé (320) au sous-réseau (310),
dans lequel l'encapsulage selon une technique de communication prévoit une communication entre le sous-réseau (encapsulé) (320) par le biais de l'au moins une interface (325, 326) et le sous-réseau (encapsulé) (320) vers le sous-réseau (310), mais pas de communication en contournant l'au moins une interface (325, 326) entre le sous-réseau (encapsulé) (320) du sous-réseau (encapsulé) (320) et le sous-réseau (310).

2. Réseau de communication (300, 400) selon la revendication 1,
dans lequel le réseau de communication (300) est un réseau d'une cinquième génération (5G) ou d'une génération ultérieure, et dans lequel le sous-réseau (310) est une tranche du réseau de communication (300).

3. Réseau de communication (300, 400) selon la revendication 1 ou 2, dans lequel la première fonction de réseau comporte un premier code de logiciel pour l'exploitation de la première entité de réseau (321).

4. Réseau de communication (300, 400) selon la revendication 3,
dans lequel le gestionnaire de fonctions (330) est conçu pour charger le premier code de logiciel de la première fonction de réseau sur la première entité de réseau (321) et pour commander et surveiller (331a) une exécution du premier code de logiciel sur la première entité de réseau (321).

5. Réseau de communication (300, 400) selon l'une quelconque des revendications précédentes, dans lequel le sous-réseau (310) comporte une deuxième entité de réseau (322) qui est conçue pour exécuter une deuxième fonction de réseau du sous-réseau (310), dans lequel la deuxième entité de réseau (322) est disposée à l'intérieur du sous-réseau (encapsulé) (320).

6. Réseau de communication (300, 400) selon la revendication 5,
dans lequel le gestionnaire de fonctions (330) est conçu pour charger un second code de logiciel pour l'exploitation de la deuxième entité de réseau (322) de manière correspondante à la deuxième fonction de réseau sur la deuxième entité de réseau (322) et pour commander et surveiller (331b) une exécution du second code de logiciel sur la deuxième entité de réseau (322).

7. Réseau de communication (300, 400) selon la revendication 6,
dans lequel le gestionnaire de fonctions (330) est conçu pour mettre en réseau la deuxième fonction de réseau avec la première fonction de réseau.

8. Réseau de communication (300, 400) selon la revendication 7,
dans lequel le sous-réseau (310) comporte une troisième entité de réseau (311) qui est conçue pour exécuter une troisième fonction de réseau du sous-réseau (310), dans lequel la troisième entité de réseau (311) est disposée en dehors du sous-réseau (encapsulé) (320).

9. Réseau de communication (300, 400) selon la revendication 8,
dans lequel le gestionnaire de fonctions (330) est conçu pour exécuter le premier code de logiciel de la première fonction de réseau et/ou le second code de logiciel de la deuxième fonction de réseau sans influence sur la troisième fonction de réseau.

10. Réseau de communication (300, 400) selon la revendication 9,
dans lequel le sous-réseau encapsulé (320) comporte au moins une interface (325, 326) qui est conçue pour coupler le sous-réseau encapsulé (320) au sous-réseau (310) et/ou pour coupler le sous-réseau encapsulé (320) à des composants de réseau externes.

11. Réseau de communication (300, 400) selon la revendication 10, avec un gestionnaire de sous-réseau (340) qui est attribué au sous-réseau (310),
dans lequel le gestionnaire de sous-réseau (340) est conçu pour mettre en réseau le sous-réseau encapsulé (320) par le biais de l'au moins une interface (325) avec la troisième fonction de réseau de la troisième entité de réseau (311),
dans lequel le gestionnaire de sous-réseau (340) est conçu en outre pour commander et surveiller la troisième fonction de réseau de la troisième entité de réseau (311).

12. Réseau de communication (300, 400, 500, 600) selon l'une quelconque des revendications 8 à 11, avec en outre :
un commutateur (503) qui est conçu pour commuter, dans une première position de commutateur (501b), le sous-réseau encapsulé (320) dans le sous-réseau (310) et pour ponter, dans une seconde position de commutateur (501a), le sous-réseau encapsulé (320) dans le sous-réseau (310).

13. Réseau de communication (700) selon la revendication 12,
dans lequel le commutateur (603) est conçu en outre pour commuter (613, 614) ou ponter la première entité de réseau (321) et la deuxième entité de réseau (322) du sous-réseau encapsulé (320) de manière sélective dans le sous-réseau (310).

14. Réseau de communication (800) selon la revendication 13,
dans lequel le commutateur (703) est conçu pour relier ensemble de manière sélective la première entité de réseau (321) et la deuxième entité de réseau (322) du sous-réseau encapsulé (320) avec la troisième entité de réseau (311) en dehors du sous-réseau (encapsulé) (320).

15. Procédé (900) d'exécution d'une première fonction de réseau dans un sous-réseau encapsulé d'un réseau de communication avec une pluralité de sous-réseaux, avec les étapes suivantes :
la formation (901) d'un sous-réseau encapsulé dans le sous-réseau de sorte que le sous-réseau encapsulé est disposé encapsulé selon une technique de communication dans le sous-réseau ;
la disposition (902) d'une première entité de réseau, qui est conçue pour exécuter une première fonction de réseau du sous-réseau, à l'intérieur du sous-réseau ; et
la gestion (903) de l'exécution de la première fonction de réseau par le biais de la première entité de réseau dans le sous-réseau encapsulé par le biais d'un gestionnaire de fonctions,
**caractérisé en ce que**
le sous-réseau encapsulé (320) comporte au moins une interface (325, 326) qui est conçue pour coupler le sous-réseau encapsulé (320) au sous-réseau (310),
dans lequel l'encapsulage selon une technique de communication prévoit une communication du sous-réseau (encapsulé) (320) par le biais de l'au moins une interface (325, 326) du sous-réseau (encapsulé) (320) au sous-réseau (310), mais pas de communication entre le sous-réseau (encapsulé) (320) et le sous-réseau (310) en contournant l'au moins une interface (325, 326) du sous-réseau (encapsulé) (320).
